# EUROPÄISCHE PATENTANMELDUNG

(11) **EP 4 675 234 A1**
(43) Veröffentlichungstag der Anmeldung: **07.01.2026**
(21) Anmeldenummer: 25180303.7
(22) Anmeldetag: 03.06.2025
(51) Int. Cl.: G01D 5/48

(54) **POSITIONSSENSOR-BAUGRUPPE MIT BIEGSAMEM WELLENLEITER-HÜLLROHR**

(30) Priorität: 04.07.2024 DE 202024103680 U
(71) Anmelder: Temposonics GmbH & Co. KG, 58513 Lüdenscheid (DE)
(72) Erfinder: Klüppel, Christian, 58809 Neuenrade (DE); Hesse, Dominik, 58119 Hagen (DE)
(74) Vertreter: Meissner Bolte Partnerschaft mbB

(57) **Zusammenfassung**

Die Erfindung betrifft eine Positionssensor-Baugruppe (1) eines Hydraulik- oder Maschinensystems, die mindestens einen Positionssensor vom magnetostriktiven Typ umfasst, bei dem der Positionssensor die Position eines auf einem Wellenleiter-Hüllrohr (3) axial verschieblichen Magneten (4) bezüglich eines im Wellenleiter-Hüllrohr axial angeordneten Wellenleiters (3.3) erfasst, wobei das Wellenleiter-Hüllrohr biegsam ausgeführt ist.

## Beschreibung

Die Erfindung betrifft eine Positionssensor-Baugruppe eines Hydraulik- oder Maschinensystems, die mindestens einen Positionssensor vom magnetostriktiven Typ umfasst, bei dem der Positionssensor die Position eines auf einem Wellenleiter-Hüllrohr axial verschieblichen Magneten bezüglich eines im Wellenleiter-Hüllrohr axial angeordneten Wellenleiters erfasst. Sie betrifft des Weiteren eine Liefereinheit einer solchen Positionssensor-Baugruppe sowie ein Hydraulik- oder Maschinensystem, in das eine solche Positionssensor-Baugruppe eingebaut ist.

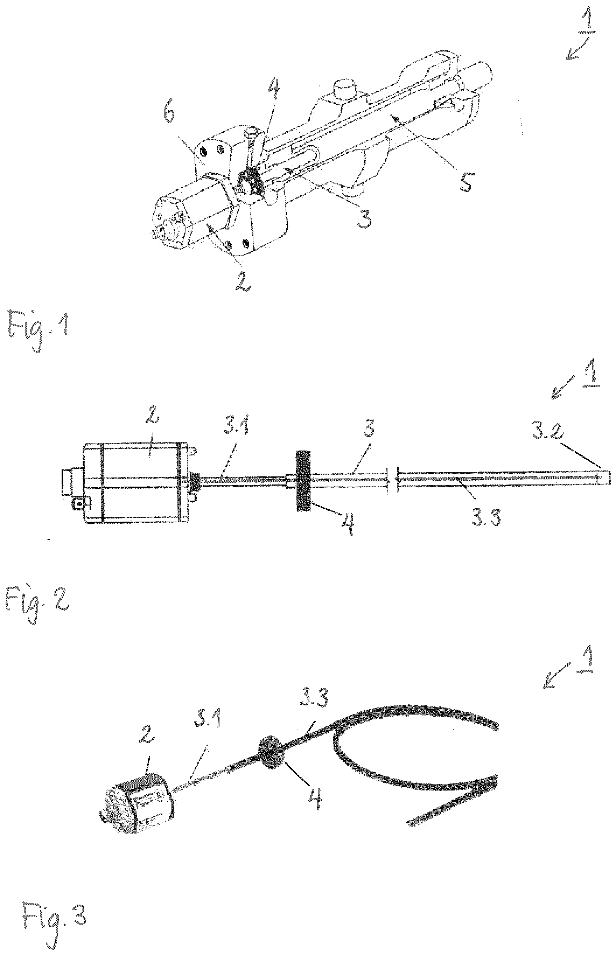

Eine typische Sensorbaugruppe des hier betrachteten Prinzips ist in Fig. 1 gezeigt. Die Sensoren werden häufig in Hydraulikzylindern eingesetzt, um die Hubbewegung des Kolbens im Zylinder zu messen.

Die Positionssensor-Baugruppe 1 besteht aus einem Elektronikgehäuse 2 und einem Sensorrohr 3 - im Folgenden bezeichnet als Wellenleiter-Hüllrohr -, in welchem sich die Messstrecke (im Wesentlichen ein Wellenleiter) befindet. Auf dem Sensorrohr wird ein Positionsmagnet 4 bewegt, welcher das Sensorrohr umschließt. Die Position des Magneten entlang der axialen Ausdehnung des Sensorrohrs wird mittels des magnetostriktiven Messprinzips bestimmt.

In Fig. 1 ist dieser Positionsmagnet 4 beispielhaft in einem Kolben befestigt, an welchem sich die Kolbenstange 5 befindet. Der magnetostriktive Sensor ist fest und mit einer druckdichten Abdichtung in dem zugehörigen Zylinderkopf eines Hydraulikzylinders 6 eingebaut. Wenn sich nun der Kolben innerhalb des Zylinders bewegt, verschiebt sich damit auch die Lage des Positionsmagneten relativ zum Zylinderkopf, und aus der neuen Lage des Magneten kann die Verschiebung des Kolbens im Zylinder bestimmt werden.

Derartige Sensoren werden mittlerweile in verschiedensten Einsatzfeldern, insbesondere in Hydrauliksystemen sehr verschiedener Bauart und Größe, erfolgreich eingesetzt.

Für bestimmte Einsatzfälle hat sich Verbesserungsbedarf hinsichtlich der Konstruktion des Positionssensor-Baugruppe ergeben. Dies gilt insbesondere für Hydrauliksystem mit sehr großem Kolbenhub. Da der Stab (das Wellenleiter-Hüllrohr) des Sensors starr ist, wird bei der Installation des Sensors hinter dem Zylinder Platz benötigt, der mindestens so groß wie die Messlänge ist. Dieser Platz ist erforderlich, um den Sensor mit starrem Messstab beim Einbau in den Zylinder einschieben und bei einem Ausbau herausziehen zu können. Ein Ausbau kann erforderlich sein, wenn der Sensor ausgetauscht wird.

Zum Transport eines solchen Sensors ist eine geeignete Box erforderlich. Während Sensoren mit einer Messlänge bis etwa 1 m in einem Karton transportiert werden können, ist für Sensoren mit einer größeren Messlänge eine Holzbox oder ähnliches erforderlich. Je länger der Sensor ist, desto teurer sind die Verpackung und der Transport des Sensors.

Es besteht daher die Aufgabe, die bekannte Positionssensor-Baugruppe hinsichtlich ihrer Handhabung sowie der Anwendungsbreite zu verbessern.

Diese und weiteren Aufgaben werden durch eine Positionssensor-Baugruppe mit den Merkmalen des Anspruchs 1 gelöst. Zweckmäßige Fortbildungen der Erfindung sind Gegenstand der abhängigen Ansprüche. Des Weiteren wird eine Liefereinheit einer Positionssensor-Baugruppe mit den Merkmalen des Anspruchs 9 sowie ein Hydraulik- oder Maschinensystem mit den Merkmalen des Anspruchs 11 vorgeschlagen.

Bei dem erfindungsgemäßen magnetostriktiven Positionssensor mit flexiblem Sensorohr bzw. Wellenleiter-Hüllrohr besteht dieses nicht aus einem starren Rohr, sondern aus einem Schlauch. Dieser Schlauch ist flexibel (biegsam), so dass der Messstab zum Beispiel in einem Bogen verlegt oder sogar aufgewickelt werden kann.

In vorteilhaften Ausführungen der Erfindung, die die Montage auf eng begrenztem Raum sowie eine besonders kompakte Verpackung ermöglichen, ist vorgesehen, dass das Wellenleiter-Hüllrohr mit einem Biegeradius von weniger als 250 mm, insbesondere von weniger als 100 mm, biegsam ausgeführt ist.

In einer Ausgestaltung ist das Wellenleiter-Hüllrohr elastisch biegsam ausgeführt, es kann jedoch auch plastisch biegsam sein.

In einer weiteren praktisch bedeutsamen Ausführung ist vorgesehen, dass das Wellenleiter-Hüllrohr eine flexible metallische Abschirmung aufweist, welche insbesondere ein biegsames Metallgeflecht in Art der Abschirmung eines Koaxialkabels oder eine Vielzahl von beweglich ineinander gesteckten Metallsegmenten in Art eines Duschschlauches umfassen kann.

In einer weiteren Ausführung der Erfindung weist das Wellenleiter-Hüllrohr eine flüssigkeitsdichte Ummantelung, insbesondere aus oder mit Teflon oder einem Polyurethan, auf.

In Ausführungen der Erfindung, die eine deutliche Erweiterung der Einsatzbereiches ermöglichen, hat das Wellenleiter-Hüllrohr eine Länge von mehr als 8000 mm, bis hin zu 20 m oder mehr.

In weiteren vorteilhaften Ausführungen der Erfindung ist vorgesehen, dass das flexible Wellenleiter-Hüllrohr einen Außendurchmesser von 8 mm oder weniger, insbesondere von 6,5 mm oder weniger, aufweist. Dies ermöglicht das Einsetzen in vorhandene starre Sensorrohre an sich bekannter Messanordnungen.

In einer Ausführung der Erfindung ist die Positionssensor-Baugruppe mit einem an das Wellenleiter-Hüllrohr direkt angefügten Sensorelektronik-Gehäuse vorgesehen.

Die vorgeschlagenen Liefereinheit ist mit einem Verpackungskasten ausgestaltet, in dem das Wellenleiter-Hüllrohr in gebogenem Zustand aufgenommen ist, derart, dass alle Abmessungen des Verpackungskasten kleiner als die Länge des Wellenleiter-Hüllrohres sind. Dies ermöglicht die leichte logistische Handhabung von Baugruppen mit sehr langem Wellenleiter-Hüllrohr.

Eine Ausgestaltung dieser vorgeschlagenen Liefereinheit ist derart, dass das Wellenleiter-Hüllrohr im Verpackungskasten, insbesondere mehrfach, aufgewickelt untergebracht ist.

Zumindest in sinnvollen Ausgestaltungen der Erfindung erbringt diese einen oder mehrere der folgenden Vorteile:
- Der Sensor kann beim Transport aufgewickelt werden, so dass wenig Platz benötigt wird.
- Der Sensor kann bei beengten Platzverhältnissen installiert werden, weil er im Bogen in eine Führung eingeschoben werden kann.
- Der Sensor kann mit großen Messlängen umgesetzt werden - Sensoren mit unflexiblem bzw. starrem Messstab werden in den meisten Fällen mit einer Messlänge bis etwa 8 m angeboten. Die Sensorelektronik des magnetostriktiven Positionssensors mit flexiblem Messstab ist so ausgelegt, dass bei passender Strompulsgenerierung Messlängen von 20 m und mehr realisiert werden können.
- Das flexible Sensorrohr erfüllt in Verbindung mit dem Sensorelektronikgehäuse die Schutzklasse IP68 und erreicht durch metallische Ummantelung elektromagnetische Verträglichkeit.

Vorteile und Zweckmäßigkeiten der Erfindung ergeben sich im Übrigen aus der nachfolgenden Beschreibung von Ausführungsformen anhand der Figuren. Von diesen zeigen:
- Fig. 1: eine schematische perspektivische Darstellung einer konventionellen Positionssensor-Baugruppe,
- Fig. 2: eine schematische Schnittansicht einer Ausführungsform der erfindungsgemäßen Positionssensor-Baugruppe und
- Fig. 3: eine perspektivische Ansicht der Positionssensor-Baugruppe nach Fig. 2 mit aufgewickeltem Wellenleiter-Hüllrohr.

Fig. 2 zeigt eine Ausführungsform der erfindungsgemäßen Positionssensor-Baugruppe 1, wobei die wesentlichen Teile mit den gleichen Ziffern wie in Fig. 1 bezeichnet sind. Es ist zudem gezeigt, dass das - hier geradeliegende, aber biegsame - Sensorrohr (Wellenleiter-Hüllrohr) 3 ein Anschlussstück 3.1 zum Anschluss an das Elektronikgehäuse 2 und am anderen Ende ein Endstück 3.2 hat und dass in ihm das Sensorelement (der Wellenleiter) 3.3 angeordnet ist.

Fig. 3 zeigt diese Ausführungsform mit aufgewickeltem Wellenleiter-Hüllrohr 3.

Wie das starre Rohr bei einem Sensor in Stabform schützt die Schlauchbaugruppe das innenliegende Sensorelement 3.3 gegenüber der Umgebung. Zudem bietet der flexible Schlauch eine Stützwirkung, um zu geringe Biegeradien und somit eine Beschädigung des Sensorelements zu verhindern. Das Anschlusselement 3.1 am Übergang zwischen Sensorelektronikgehäuse 2 und flexiblem Schlauch 3 sorgt dafür, dass das Sensorelement durch Biegung nicht von der Sensorelektronik abgerissen wird.

Das flexible Hüllrohr der erfindungsgemäßen Sensorbaugruppe ist beispielhaft so gestaltet, dass es in eine Hydraulikbaugruppe eines Positionssensors in Stabform eingeschoben werden kann. Das Sensorelektronikgehäuse des magnetostriktiven Positionssensors mit flexiblem Sensorstab bzw. Wellenleiter-Hüllrohr wird dabei am Flansch der Hydraulikbaugruppe montiert. So kann der Sensor mit flexiblem Messstab in gleicher Weise genutzt werden wie ein magnetostriktiver Positionssensor in Stabform.

Andererseits ermöglicht das biegsame Wellenleiter-Hüllrohr nicht nur eine neuartige, kompakte Verpackung und somit entsprechende Liefereinheit der Positionssensor-Baugruppe, sondern auch den Betrieb des magnetostriktiven Positionssensors in Hydraulik- bzw. Maschinensystemen, in denen das bewegliche Element, dessen Position zu bestimmen ist, sich längs einer gebogenen Bahn bewegt, z. B. bei der Blattwinkelverstellung einer Windenergieanlage. In diesen Einsatzfällen wird das Wellenleiter-Hüllrohr entsprechend der Bewegungsbahn dieses Teils verlegt. Es versteht sich, dass der Positionsmagnet derart zu gestalten ist, dass er zusammen mit dem bewegbaren Teil auf dem gebogenen Wellenleiter-Hüllrohr problemlos gleiten kann. Gegebenenfalls ist auch die Elektronikbaugruppe an eine solche Konfiguration geeignet anzupassen.

Im Übrigen ist die Ausführung der Erfindung auch in einer Vielzahl von Abwandlungen der hier gezeigten Beispiele und weiter oben hervorgehobenen Aspekte der Erfindung möglich.

## Patentansprüche

1. Positionssensor-Baugruppe eines Hydraulik- oder Maschinensystems, die mindestens einen Positionssensor vom magnetostriktiven Typ umfasst, bei dem der Positionssensor die Position eines auf einem Wellenleiter-Hüllrohr axial verschieblichen Magneten bezüglich eines im Wellenleiter-Hüllrohr axial angeordneten Wellenleiters erfasst,
wobei das Wellenleiter-Hüllrohr biegsam ausgeführt ist.

2. Positionssensor-Baugruppe nach Anspruch 1, wobei das Wellenleiter-Hüllrohr mit einem Biegeradius von weniger als 250 mm, insbesondere von weniger als 100 mm, biegsam ausgeführt ist.

3. Positionssensor-Baugruppe nach Anspruch 1 oder 2, wobei das Wellenleiter-Hüllrohr elastisch biegsam ausgeführt ist.

4. Positionssensor-Baugruppe nach einem der vorangehenden Ansprüche, wobei das Wellenleiter-Hüllrohr eine flexible metallische Abschirmung aufweist, welche insbesondere ein biegsames Metallgeflecht oder eine Vielzahl von beweglich ineinander gesteckten Metallsegmenten umfasst.

5. Positionssensor-Baugruppe nach einem der vorangehenden Ansprüche, wobei das Wellenleiter-Hüllrohr eine flüssigkeitsdichte Ummantelung, insbesondere aus oder mit Teflon oder einem Polyurethan, aufweist.

6. Positionssensor-Baugruppe nach einem der vorangehenden Ansprüche, wobei das Wellenleiter-Hüllrohr eine Länge von mehr als 8000 mm aufweist.

7. Positionssensor-Baugruppe nach einem der vorangehenden Ansprüche, wobei das Wellenleiter-Hüllrohr einen Außendurchmesser von 8 mm oder weniger, insbesondere von 6,5 mm oder weniger, aufweist.

8. Positionssensor-Baugruppe nach einem der vorangehenden Ansprüche, mit einem an das Wellenleiter-Hüllrohr angefügten Sensorelektronik-Gehäuse.

9. Liefereinheit einer Positionssensor-Baugruppe nach einem der vorangehenden Ansprüche, mit einem Verpackungskasten, in dem das Wellenleiter-Hüllrohr in gebogenem Zustand aufgenommen ist, derart, dass alle Abmessungen des Verpackungskasten kleiner als die Länge des Wellenleiter-Hüllrohres sind.

10. Liefereinheit nach Anspruch 9, wobei das Wellenleiter-Hüllrohr im Verpackungskasten, insbesondere mehrfach, aufgewickelt untergebracht ist.

11. Hydraulik- oder Maschinensystem mit einer Positionssensor-Baugruppe nach einem der vorangehenden Ansprüche zur Erfassung der Position eines Hydraulikkolbens in einem Hydraulikzylinder oder eines bewegbaren Maschinenteils innerhalb der Maschine, wobei die Bewegungsbahn des Hydraulikkolbens oder des bewegbaren Maschinenteils gekrümmt ist und das Wellenleiter-Hüllrohr der Positionssensor-Baugruppe im Betriebszustand eine der Bewegungsbahn entsprechende Krümmung aufweist.
